# EUROPEAN PATENT APPLICATION

(11) **EP 4 660 459 A1**
(43) Date of publication of application: **10.12.2025**
(21) Application number: 23942200.9
(22) Date of filing: 22.12.2023
(51) Int. Cl.: F04C 29/12

(54) **EXHAUST STRUCTURE AND COMPRESSOR**

(30) Priority: 20.06.2023 CN 202310742155
(71) Applicant: Gree Electric Appliances, Inc. of Zhuhai, Zhuhai, Guangdong 519070 (CN)
(72) Inventor: LIANG, Shebing, Zhuhai, Guangdong 519070 (CN); QUE, Peizhen, Zhuhai, Guangdong 519070 (CN); JIANG, Qiulai, Zhuhai, Guangdong 519070 (CN); YANG, Chunxia, Zhuhai, Guangdong 519070 (CN); LAN, Rongjiang, Zhuhai, Guangdong 519070 (CN)
(74) Representative: Zacco GmbH
(86) International application number: PCT/CN2023/141282
(87) International publication number: WO 2024/259935

(57) **Abstract**

Provided are an exhaust structure and a compressor. The exhaust structure includes an exhaust flange (10). The exhaust flange (10) is provided with a main exhaust port (20), wherein two ends of the main exhaust port (20) are respectively an air intake end and an exhaust end; the air intake end is in communication with a compression cavity of an air cylinder; a groove in an inner wall of the air intake end forms an auxiliary exhaust port (30); and the auxiliary exhaust port (30) is in communication with both the compression cavity and the main exhaust port (20). The main exhaust port (20) and the auxiliary exhaust port (30) jointly form an exhaust channel. By means of providing the auxiliary exhaust port (30), an exhaust area at an end of the exhaust channel that is in communication with the compression cavity is increased, thereby effectively reducing an exhaust loss of the compressor during high-frequency operation. In addition, an exhaust area at an end (i.e., the exhaust end of the main exhaust port (20)) of the exhaust channel that is matched with a valve plate is small, so that a difference between pressures of two sides of the valve plate when the valve plate is closed is small, and thus a deformation of the valve plate is small, thereby ensuring reliability of the valve plate, solving a problem that the exhaust structure is difficult to balance the high-frequency exhaust loss and the reliability of the valve plate.

## Description

The present invention claims priority to patent application No. 202310742155.1, entitled "Exhaust structure and compressor" filed with the State Intellectual Property Office of P. R. China on June 20, 2023.

### Technical Field

The present invention relates to the technical field of compressors, specifically to an exhaust structure and a compressor.

### Background

With the development of rotary compressor technology, the displacement of a rotary compressor has been expanded to over 100 cc, which can meet the cooling capacity demand of an air-conditioning system of over 20 hp. The development demand for a large-displacement rotary compressor is intense, and the design of an exhaust system for the large-displacement compressor is crucial. The exhaust system not only affects the performance of the compressor but also affects the reliability of the compressor. If a single exhaust port is too large, the reliability of a valve plate for opening and closing the exhaust port decreases. If the exhaust port is too small, the exhaust loss increases during high-frequency operation, and the performance of the compressor decreases.

Specifically, due to its large displacement and wide operating condition range, the large-displacement compressor has an operating frequency ranging from 10 hz to 150 hz. In order to meet high energy efficiency requirements of high, medium and low frequencies, the valve plate cannot be too thick; and furthermore, in order to reduce the high-frequency exhaust loss, a larger exhaust port area is needed to meet the exhaust demand. In the study, it is found that when the area of the single exhaust port is too large, an upper surface of the valve plate during a closing phase is subjected to an exhaust pressure, a lower surface of the valve plate is subjected to a suction pressure, a gas pressure difference between the upper surface and the lower surface is maximum, the valve plate is in a concave deformation state, an amount of deformation of a center point of the valve plate is maximum, and the stress on the valve plate is too large after exceeding a certain amount of deformation, which causes a reliability problem of the valve plate. However, in order to reduce the exhaust loss during high-frequency operation and ensure the energy efficiency of the compressor during high-frequency operation, the exhaust port of the compressor needs to be designed according to a larger exhaust area. How to balance the high-frequency exhaust loss and the reliability problem of the valve plate is the key to the design of the large-displacement compressor. Therefore, when the displacement of the compressor is designed to be larger and larger, simply increasing the pore size of the exhaust port to increase the exhaust area using an existing design solution is difficult to meet the dual-design requirements of the energy efficiency of the compressor and the reliability of the valve plate. Therefore, a new exhaust structure needs to be designed to solve the above problem.

### Summary

The present invention provides an exhaust structure and a compressor to solve the problem in the prior art that the exhaust structure is difficult to balance the high-frequency exhaust loss and the reliability of the valve plate.

In order to solve the above problem, according to one aspect of the present invention, the present invention provides an exhaust structure for a compressor, including: an exhaust flange, wherein the exhaust flange is provided with a main exhaust port, two ends of the main exhaust port are respectively an air intake end and an exhaust end, the air intake end is in communication with a compression cavity of an air cylinder, a groove in an inner wall of the air intake end forms an auxiliary exhaust port, and the auxiliary exhaust port is in communication with both the compression cavity and the main exhaust port.

Further, along an axis direction of the main exhaust port, flow areas of the auxiliary exhaust port at different positions are equal.

Further, a flow area of the main exhaust port is S1, a flow area of the auxiliary exhaust port is S2, and K=S2/S1, wherein 0.1≤K≤0.6.

Further, 0.35≤K≤0.45.

Further, on a matched end surface where the exhaust flange is matched with the air cylinder, an edge of the auxiliary exhaust port is a part of a predetermined circumference.

Further, the exhaust flange has a mounting hole for mounting a valve plate, and the valve plate is configured to open and close the exhaust end of the main exhaust port; on the matched end surface, a center of a circle of the main exhaust port is O₁, a center of a circle of the predetermined circumference is O₂, and a center of a circle of the mounting hole is O₃; and a connecting line between O₁ and O₂ is used as a first connecting line, a connecting line between O₁ and O₃ is used as a second connecting line, and an included angle between the first connecting line and the second connecting line is θ, wherein θ≤90°.

Further, θ≤30°.

Further, along an axis direction of the main exhaust port, a height of the main exhaust port is H, and a height of the auxiliary exhaust port is h, wherein 0.2<h/H≤0.5.

According to another aspect of the present invention, a compressor is provided. The compressor includes the above exhaust structure.

Further, the compressor further includes the air cylinder and a valve plate, the air cylinder has the compression cavity, the exhaust flange is connected to the air cylinder, both the main exhaust port and the auxiliary exhaust port are in communication with the compression cavity, the valve plate is mounted on the exhaust flange, and the valve plate is configured to open and close the exhaust end of the main exhaust port.

A technical solution applying the present invention provides an exhaust structure, the exhaust structure includes an exhaust flange, the exhaust flange is provided with a main exhaust port, two ends of the main exhaust port are respectively an air intake end and an exhaust end, the air intake end is in communication with a compression cavity of an air cylinder, a groove in an inner wall of the air intake end forms an auxiliary exhaust port, and the auxiliary exhaust port is in communication with both the compression cavity and the main exhaust port. In this solution, the main exhaust port and the auxiliary exhaust port jointly form an exhaust channel. By means of providing the auxiliary exhaust port, an exhaust area at an end of the exhaust channel that is in communication with the compression cavity is increased, thereby effectively reducing an exhaust loss of the compressor during high-frequency operation. In addition, an exhaust area at an end (i.e., the exhaust end of the main exhaust port) of the exhaust channel that is matched with the valve plate is small, so that a difference between pressures of two sides of the valve plate when the valve plate is closed is small, and thus a deformation of the valve plate is small, thereby ensuring the reliability of the valve plate. Therefore, compared with the prior art, this solution solves a problem that the exhaust structure is difficult to balance the high-frequency exhaust loss and the reliability of the valve plate.

If the auxiliary exhaust port is designed too large, a clearance volume increases, and a volume efficiency decreases. If the auxiliary exhaust port is designed too small, the exhaust loss increases, and an indicated efficiency decreases. Therefore, the size of the auxiliary exhaust port needs to be within a certain range to have a better value. Furthermore, the compressor operates in a wide range of operating conditions and frequencies, and design requirements for the auxiliary exhaust port are different according to different operating conditions and frequencies. In order to meet high efficiency of medium, high and low frequencies and all operating conditions, and ensure the reliability of the valve plate at high frequencies, through extensive simulation calculations and analysis, it has been found that the new exhaust structure of this solution can effectively ensure the energy efficiency of the compressor while ensuring the reliability of the valve plate. The K value in the new exhaust structure in this solution is designed to ensure preferred compressor performance within the above range.

### Brief Description of the Drawings

The accompanying drawings of the specification, constituting a part of the present invention, are used for providing a further understanding for the present invention. Exemplary embodiments of the present invention and descriptions thereof are used for explaining the present invention, but do not constitute any improper limitation on the present invention. In the accompanying drawings:
Fig. 1 shows a schematic view of an exhaust structure provided in an embodiment of the present invention;
Fig. 2 shows a bottom view of the exhaust structure in Fig. 1;
Fig. 3 shows a top view of the exhaust structure in Fig. 1;
Fig. 4 shows a partial enlarged view of Fig. 2;
Fig. 5 shows a cross-sectional view of Fig. 2; and
Fig. 6 shows a view of a relationship between energy efficiency of a compressor using the exhaust structure provided in the present invention and a K value.

The above accompanying drawings have the following reference numerals:
10. exhaust flange; 20. main exhaust port; 30. auxiliary exhaust port; 40. mounting hole.

### Detailed Description of the Embodiments

The following clearly and completely describes technical solutions in embodiments of the present invention with reference to the accompanying drawings in the embodiments of the present invention. Obviously, the described embodiments are only some embodiments rather than all the embodiments of the present invention. The following descriptions of at least one exemplary embodiment are merely illustrative actually, and should not be construed as any limitation on the present invention and the application or use thereof. All other embodiments obtained by those of ordinary skill in the art based on the embodiments in the present invention without creative work shall fall within the protection scope of the present invention.

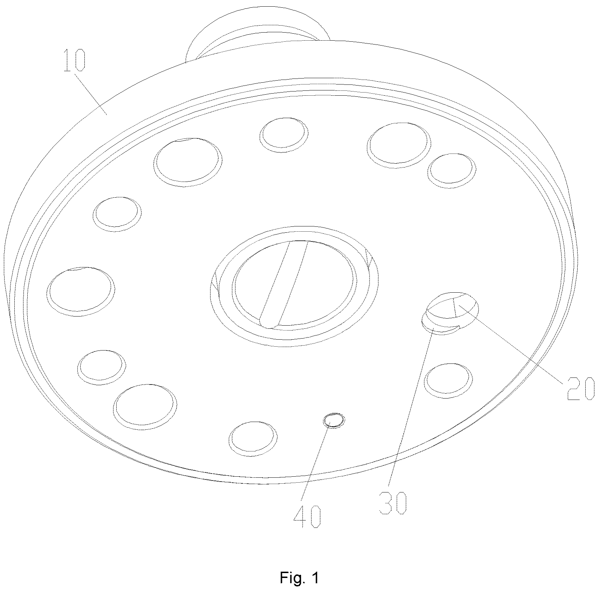

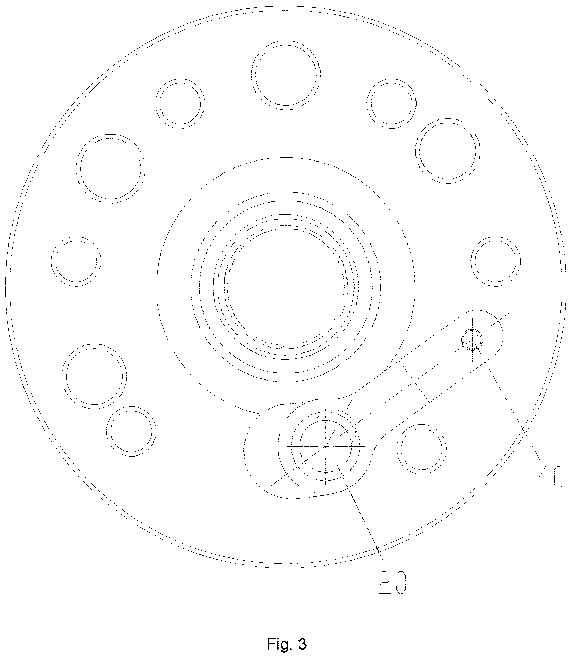

As shown in Fig. 1 to Fig. 6, some embodiments of the present invention provide an exhaust structure for a compressor, including: an exhaust flange 10, wherein the exhaust flange 10 is provided with a main exhaust port 20, two ends of the main exhaust port 20 are respectively an air intake end and an exhaust end, the air intake end is in communication with a compression cavity of an air cylinder, a groove in an inner wall of the air intake end forms an auxiliary exhaust port 30, and the auxiliary exhaust port 30 is in communication with both the compression cavity and the main exhaust port 20.

In this solution, the main exhaust port 20 and the auxiliary exhaust port 30 jointly form an exhaust channel. By means of providing the auxiliary exhaust port 30, an exhaust area at an end of the exhaust channel that is in communication with the compression cavity of the air cylinder is increased, thereby effectively reducing an exhaust loss of the compressor during high-frequency operation. In addition, an exhaust area at an end (i.e., the exhaust end of the main exhaust port 20) of the exhaust channel that is matched with the valve plate is small, so that a difference between pressures of two sides of the valve plate when the valve plate is closed is small, and thus a deformation of the valve plate is small, thereby ensuring the reliability of the valve plate. Therefore, compared with the prior art, this solution solves a problem that the exhaust structure is difficult to balance the high-frequency exhaust loss and the reliability of the valve plate, and achieves small high-frequency exhaust loss of the exhaust structure and high reliability of the valve plate.

In this solution, along an axis direction of the main exhaust port 20, flow areas of the auxiliary exhaust port 30 at different positions are equal. That is, a cross-sectional area of the auxiliary exhaust port 30 remains unchanged, which facilitates the processing of the auxiliary exhaust port 30.

In some embodiments, a flow area of the main exhaust port 20 is S1, a flow area of the auxiliary exhaust port 30 is S2, and K=S2/S1, wherein 0.1≤K≤0.6.

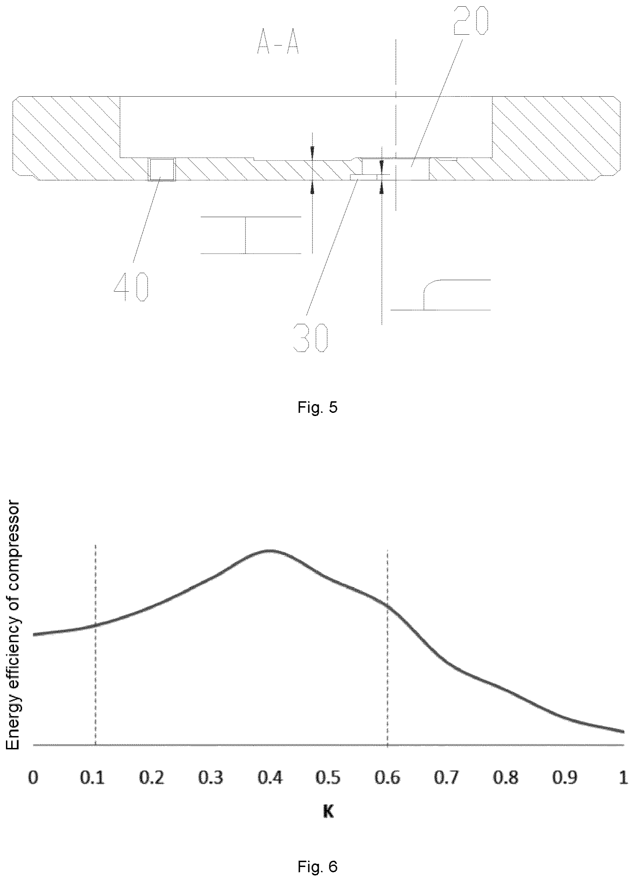

The new exhaust structure is used to effectively solve the problems of excessive exhaust loss and inability to balance the reliability of the valve plate during high-frequency operation of a large-displacement compressor. An energy efficiency of the compressor is positively correlated with a volume efficiency and an indicated efficiency, and the exhaust loss is a key factor affecting the indicated efficiency. If the auxiliary exhaust port is designed too large, a clearance volume increases, and the volume efficiency decreases. If the auxiliary exhaust port is designed too small, the exhaust loss increases, and the indicated efficiency decreases. Therefore, the size of the auxiliary exhaust port needs to be within a certain range to have a better value. Furthermore, the compressor operates in a wide range of operating conditions and frequencies, and design requirements for the auxiliary exhaust port are different according to different operating conditions and frequencies. In order to meet high efficiency of medium, high and low frequencies and all operating conditions, and ensure the reliability of the valve plate at high frequencies, through extensive simulation calculations and analysis, it has been found that the new exhaust structure of this solution can effectively ensure the energy efficiency of the compressor while ensuring the reliability of the valve plate. As shown in Fig. 6, the K value in the new exhaust structure in this solution is designed to ensure preferred compressor performance within the above range.

In some embodiments, 0.35≤K≤0.45. In this way, the compressor has a better using effect and higher energy efficiency. The optimal point of the K value is 0.4.

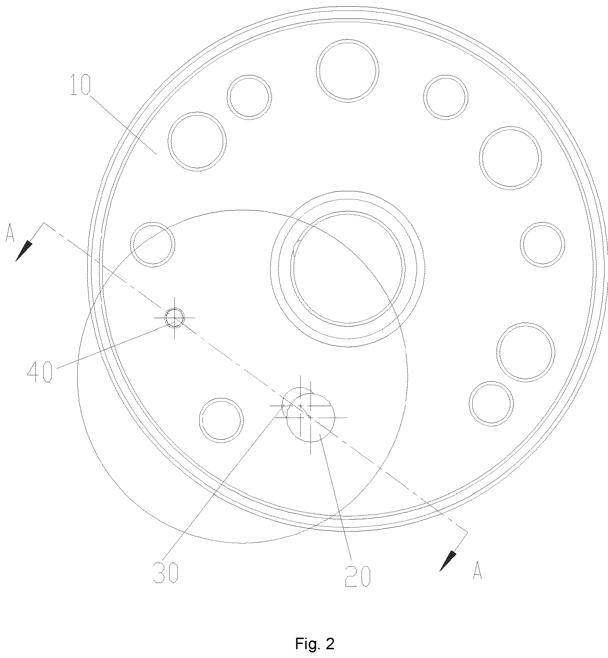

As shown in Fig. 2, on a matched end surface where the exhaust flange 10 is matched with the air cylinder, an edge of the auxiliary exhaust port 30 is a part of a predetermined circumference. In this way, the auxiliary exhaust port 30 is easy to process, for example, by means of milling.

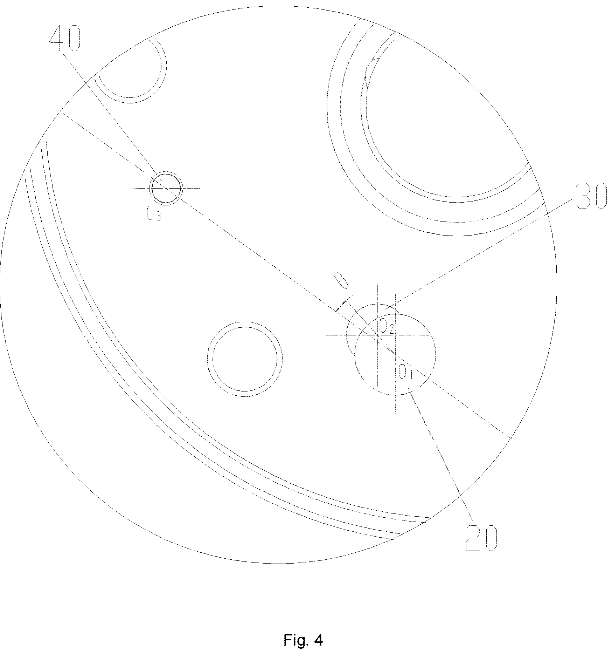

As shown in Fig. 4, the exhaust flange 10 has a mounting hole 40 for mounting a valve plate, and the valve plate is configured to open and close the exhaust end of the main exhaust port 20; on the matched end surface, a center of a circle of the main exhaust port 20 is O₁, a center of a circle of the predetermined circumference is O₂, and a center of a circle of the mounting hole 40 is O₃; and a connecting line between O₁ and O₂ is used as a first connecting line, a connecting line between O₁ and O₃ is used as a second connecting line, and an included angle between the first connecting line and the second connecting line is θ, wherein θ≤90°. In this way, the position of the auxiliary exhaust port 30 is limited to the vicinity of the second connecting line. Within this range, an axial projection of the auxiliary exhaust port 30 mostly falls within the compression cavity of the air cylinder. The auxiliary exhaust port 30 is arranged within a range of both sides of the second connecting line, which can effectively increase an exhaust flow area, reduce the high-frequency exhaust loss, improve the compressor efficiency and also ensure the reliability of the valve plate.

In some embodiments, θ≤30°. In this way, the exhaust flow area can be better increased, and the high-frequency exhaust loss can be better reduced.

As shown in Fig. 5, along an axis direction of the main exhaust port 20, a height of the main exhaust port 20 is H, and a height of the auxiliary exhaust port 30 is h, wherein 0.2<h/H≤0.5. If the height of the auxiliary exhaust port 30 is too high, on the one hand, the clearance volume increases, and the volume efficiency of the compressor decreases, thereby reducing the energy efficiency. Furthermore, if the height of the auxiliary exhaust port 30 is too high, at the auxiliary exhaust port 30, a local strength of the exhaust flange 10 is weakened, which can easily lead to deformation and insufficient strength of the exhaust flange 10 during high-frequency and high-load operation, resulting in a fracture problem. Therefore, the height of the auxiliary exhaust port 30 should not exceed 50% of the height of the main exhaust port 20. If the height of the auxiliary exhaust port 30 is too low, a space for the high-frequency exhaust decreases, and the exhaust loss increases, thereby reducing the indicated efficiency of the compressor, and also reducing the energy efficiency of the compressor. Therefore, the height of the auxiliary exhaust port 30 should be greater than 20% of the height of the main exhaust port 20.

In some embodiments, a side of the exhaust flange 10 away from the air cylinder is provided with an assembly groove, the valve plate is mounted in the assembly groove, a peripheral edge of the exhaust end of the main exhaust port 20 is provided with a sealing convex rib, the sealing convex rib is arranged on a bottom wall of the assembly groove, the sealing convex rib is matched with the valve plate, and full contact between the sealing convex rib and the valve plate is ensured, thereby ensuring a sealing effect when the main exhaust port 20 is closed.

Some embodiments of the present invention further provide a compressor. The compressor includes the above exhaust structure. In this solution, the main exhaust port 20 and the auxiliary exhaust port 30 jointly form an exhaust channel. By means of providing the auxiliary exhaust port 30, an exhaust area at an end of the exhaust channel that is in communication with the compression cavity of the air cylinder is increased, thereby effectively reducing an exhaust loss of the compressor during high-frequency operation. In addition, an exhaust area at an end (i.e., the exhaust end of the main exhaust port 20) of the exhaust channel that is matched with the valve plate is small, so that a difference between pressures of two sides of the valve plate when the valve plate is closed is small, and thus a deformation of the valve plate is small, thereby ensuring the reliability of the valve plate. Therefore, compared with the prior art, this solution solves a problem that the exhaust structure is difficult to balance the high-frequency exhaust loss and the reliability of the valve plate, and achieves small high-frequency exhaust loss of the exhaust structure and high reliability of the valve plate.

The compressor further includes the air cylinder and a valve plate, the air cylinder has the compression cavity for compressing refrigerants, the exhaust flange 10 is connected to the air cylinder, both the main exhaust port 20 and the auxiliary exhaust port 30 are in communication with the compression cavity, the valve plate is mounted on the exhaust flange 10, and the valve plate is configured to open and close the exhaust end of the main exhaust port 20.

The above descriptions are merely some embodiments of the present invention, but are not intended to limit the present invention. For those skilled in the art, the present invention may have various modifications and variations. Any modifications, equivalent substitutions, improvements, and the like made within the spirit and principle of the present invention shall fall within the protection scope of the present invention.

## Claims

1. An exhaust structure for a compressor, comprising:
an exhaust flange (10), wherein the exhaust flange (10) is provided with a main exhaust port (20), two ends of the main exhaust port (20) are respectively an air intake end and an exhaust end, the air intake end is in communication with a compression cavity of an air cylinder, a groove in an inner wall of the air intake end forms an auxiliary exhaust port (30), and the auxiliary exhaust port (30) is in communication with both the compression cavity and the main exhaust port (20).

2. The exhaust structure according to claim 1, wherein along an axis direction of the main exhaust port (20), flow areas of the auxiliary exhaust port (30) at different positions are equal.

3. The exhaust structure according to claim 1, wherein a flow area of the main exhaust port (20) is S1, a flow area of the auxiliary exhaust port (30) is S2, and K=S2/S1, wherein 0.1≤K≤0.6.

4. The exhaust structure according to claim 3, wherein 0.35≤K≤0.45.

5. The exhaust structure according to claim 1, wherein on a matched end surface where the exhaust flange (10) is matched with the air cylinder, an edge of the auxiliary exhaust port (30) is a part of a predetermined circumference.

6. The exhaust structure according to claim 5, wherein the exhaust flange (10) has a mounting hole (40) for mounting a valve plate, and the valve plate is configured to open and close the exhaust end of the main exhaust port (20); on the matched end surface, a center of the main exhaust port (20) is O₁, a center of the predetermined circumference is O₂, and a center of the mounting hole (40) is O₃; and a connecting line between O₁ and O₂ is used as a first connecting line, a connecting line between O₁ and O₃ is used as a second connecting line, and an included angle between the first connecting line and the second connecting line is θ, wherein θ≤90°.

7. The exhaust structure according to claim 6, wherein θ≤30°.

8. The exhaust structure according to claim 1, wherein along an axis direction of the main exhaust port (20), a height of the main exhaust port (20) is H, and a height of the auxiliary exhaust port (30) is h, wherein 0.2<h/H≤0.5.

9. A compressor, wherein the compressor comprises the exhaust structure according to any one of claims 1 to 8.

10. The compressor according to claim 9, wherein the compressor further comprises the air cylinder and a valve plate, the air cylinder has the compression cavity, the exhaust flange (10) is connected to the air cylinder, both the main exhaust port (20) and the auxiliary exhaust port (30) are in communication with the compression cavity, the valve plate is mounted on the exhaust flange (10), and the valve plate is configured to open and close the exhaust end of the main exhaust port (20).
